## Europäisches Patentamt
## European Patent Office
## Office européen des brevets

(11) Veröffentlichungsnummer : **0 007 896**
**B1**

(12)

# EUROPÄISCHE PATENTSCHRIFT

(45) Veröffentlichungstag der Patentschrift :
29.07.81

(21) Anmeldenummer : 79890019.7

(22) Anmeldetag : 28.06.79

(51) Int. Cl.³ : **F 16 D 1/08, B 60 B 27/06**

(54) **Nabenverbindung.**

(30) Priorität : 13.07.78 AT 5059/78

(43) Veröffentlichungstag der Anmeldung :
06.02.80 (Patentblatt 80/03)

(45) Bekanntmachung des Hinweises auf die Patenterteilung : 29.07.81 Patentblatt 81/30

(84) Benannte Vertragsstaaten :
BE CH DE FR GB IT LU NL SE

(56) Entgegenhaltungen :
DE - C - 34 919
FR - A - 2 278 979
US - A - 1 378 091
US - A - 1 468 370

(73) Patentinhaber : Voith-Werke Ing. A. Fritz Voith Gesellschaft m.b.H. & Co. KG.
Langholzstrasse 16
A-4050 Traun (AT)

(72) Erfinder : Meingassner, Alois
Schachet
A-4681 Rottenbach (AT)
Erfinder : Lackner, Herbert
Hochstrasse 59
A-4020 Linz (AT)

(74) Vertreter : Hübscher, Gerhard, Dipl.-Ing. et al
Patentanwälte Dipl.-Ing. Gerhard Hübscher Dipl.-Ing.
Helmut Hübscher Dipl.-Ing. Heiner Hübscher Spittelwiese 7
A-4020 Linz (AT)

Imprimerie Jouve, 17, rue du Louvre, 75001 Paris, France

Nabenverbindung

Die Erfindung bezieht sich auf eine Nabenverbindung für eine drehfest, aber abnehmbar auf einer geteilten Welle sitzende Nabe, insbesondere Radnabe, mit einer sich beidseitig nach außen hin konisch erweiternden Nabenbohrung und zwei axial verspannbaren, den Konussen der Nabenbohrung angepaßte Kegelflächen aufweisenden Druckstücken.

Besteht die Forderung nach guter Lösbarkeit der Nabenverbindung bzw. nach einfacher Ausbaufähigkeit eines Festrades, werden zur Verbindung von Nabe und Welle meist Paßfedern angeordnet. Abgesehen von der bei Paßfederverbindungen erforderlichen Qualität und Bearbeitungsgenauigkeit der einander zugeordneten Oberflächen ist hier ein absolut spielfreier Sitz nicht erreichbar, was beim Umlaufen Walk- und Knetwirkungen zwischen Nabe und Welle mit sich bringt und zu hohem Verschleiß bzw. kurzer Lebensdauer führt.

Als lösbare Nabenverbindung sind auch bereits Kegelsitze bekannt, wobei die Nabe mit einer kegeligen Bohrung auf einer entsprechenden Kegelfläche der Welle sitzt und über eine Wellenmutter aufgepreßt wird. Dadurch verursacht allerdings eine Radialkraft auf das Rad auch eine Axialbelastung der Welle, und die Wellenmutter läßt praktisch nur eine fliegende Radlagerung zu. Weiters erlauben solche Kegelsitze keine exakte Lagezuordnung zwischen Nabe und Welle in axialer Richtung, da die Nabe beim Aufpressen auf den Kegelsitz axial wandert.

Es gibt auch bereits Nabenverbindungen, bei denen die Nabe eine sich beidseitig nach außen konisch erweiternde Bohrung besitzt, welchen Konussen entsprechend kegelige, auf der glatten, durchgehenden Welle sitzende Druckstücke zugeordnet sind. Als Druckstücke dienen zwei separate, geteilte Spannringe, die jeweils unabhängig voneinander über eigene Druckringe mit der Nabe verschraubt werden. Abgesehen vom recht beträchtlichen Aufwand kommt es hier zu keiner Selbstzentrierung, und wegen der Gefahr einer ungleichmäßigen Verspannung auf beiden Seiten ist überhaupt eine Zentrierung nur schwer erreichbar. Außerdem können die Druckstücke nicht gleichzeitig verspannt werden, und die sich beim Verschrauben der Druckringe an der Nabe ergebenden Axialkräfte beeinträchtigen die Längspositionierung der Nabe auf der Welle.

Bekannt sind auch schon Wellenkupplungen, bei denen die beiden Wellenteile über eine Nabe mit beidseitig sich konisch erweiternder Nabenbohrung und zwei entsprechenden Druckstücken, die entweder einzeln an der Nabe festgeschraubt oder gegeneinander axial verspannt sind, miteinander gekuppelt werden (US-A-1 378 091, DE-C-34 919). Hier dient die Nabe aber nur als reine Kupplungsmuffe, und die Druckstücke sind Losteile, die mittels Paßfedern drehfest auf den ihnen zugeordneten Wellenteilen sitzen. Eine solche Nabenverbindung ist daher aufwendig, ungünstig zu handhaben und erlaubt ebenfalls keine genaue Längspositionierung.

Es wurde auch schon ein Dorn für eine Seilrolle od. dgl. vorgeschlagen, der aus zwei auf einem durchgehenden Bolzen sitzenden und über diesen Bolzen axial zusammenspannbaren, konischen Druckstücken besteht (US-A-1 468 270), wodurch wiederum für die erreichbare Verbindung zwei lose Druckstücke mit all ihren Nachteilen maßgebend sind.

Der Erfindung liegt daher die Aufgabe zugrunde, diese Mängel zu beseitigen und eine Nabenverbindung der eingangs geschilderten Art zu schaffen, die sich durch eine einfache, rationelle Konstruktion auszeichnet, einen funktionssicheren, langlebigen Sitz der Nabe garantiert und vor allem auch eine rasche, mühelose Handhabung ermöglicht.

Die Erfindung löst diese Aufgabe dadurch, daß die einander zugekehrten Endabschnitte der beiden Wellenteile selbst die Druckstücke bilden. Die beiden mit der Nabenbohrung zusammenwirkenden, entsprechende Kegelflächen aufweisenden Endabschnitte der Wellenteile ergeben den zur Übertragung des vorhandenen Drehmomentes erforderlichen und durch die Stärke der Verspannung einstellbaren Reibungsschluß für die Nabenmitnahme. Die gegeneinander verspannbaren Wellenteile gewährleisten einen sich selbsttätig zentrierenden Nabensitz, und die bei einer Radialbelastung auftretenden Axialkomponenten heben sich gegenseitig auf, wodurch ein Axialschub auf die Welle vermieden ist. Durch das Verspannen der beiden Wellenteile mit der Nabe wird außerdem eine satte, spielfreie Anlage zwischen Konussen und Kegelflächen garantiert, so daß man einerseits mit einer relativ geringen Oberflächenqualität auskommt, anderseits auf Grund der fehlenden Knet- und Walkwirkung es zu einer verschleißfesten, langlebigen Nabenverbindung kommt. Das Fehlen von losen Druckstücken und die Zweiteiligkeit der Welle bringen dabei eine besonders problemlose Hantierbarkeit der Nabenverbindung mit sich, und auch ein Radausbau ist beispielsweise mit wenigen Handgriffen durchführbar, da die Wellenteile nach entgegengesetzten Seiten abgenommen werden können und so das Rad vollkommen freigemacht wird. Finden Wälzlager mit der Umfangslat am Innenring und Punktlast am Außenring Verwendung, ist der Innenring auf der Welle aufgepreßt und der Außenring nur lose im Lagergehäuse eingesetzt, so daß die Wellenteile samt den Wälzlagern auch bei ungeteilten Lagergehäusen ohne Schwierigkeiten auszubauen sind. Da der Klemmsitz der Nabe auf der Welle nur durch das Verspannen der Kegelflächen mit den Konussen zustandekommt, ist umgekehrt bei fehlender Verspannung auch sofort der Klemmsitz verloren, und die Wellenteile lassen sich leicht aus der Nabe herausziehen bzw. von der Nabe lösen. Die erfindungsgemäße Nabenverbindung zeichnet sich durch ihre überaus einfache und elegante Konstruktion aus und

eignet sich dabei nicht nur zur Lagerung von Festrädern, beispielsweise der Triebräder von Kranfahrwerken, sondern auch zur Lagerung beliebiger An- und Abtriebsräder, wobei die auftretenden Drehmomente auf beide Wellenteile gleichmäßig übertragen werden.

In einer günstigen Weiterbildung der Erfindung sind die beiden Wellenteile von einer freien Stirnfläche eines Wellenteiles her über eine Spannschraube miteinander verbunden. Die Spannschraube ist somit jederzeit zugänglich und kann bequem mit entsprechendem Drehmoment angezogen werden, sie stellt eine aufwandslose, die erforderliche Verspannung ermöglichende Verbindung beider Wellenteile dar und steht darüber hinaus auch der Lagerung der Wellenteile im Nahbereich ihrer Kegelflächen nicht im Wege.

In einer vorteihaften Ausgestaltung der Erfindung können die beiden Wellenteile über axial miteinander verschraubbare Flanschringe od. dgl. unter Zwischenlage der Nabe zusammengespannt sein. Da die mit den Wellenteilen verspannte Nabe sowohl eine drehfeste, als auch eine biegesteife und zug- bzw. druckfeste Verbindung der Wellenteile mit sich bringt, läßt sich so auf einfache Weise eine spielfreie, zentrierende, starre Wellenkupplung ausbilden, deren Verbindungsmoment variiert werden kann und die leicht montier- und demontierbar ist. Zum Zusammenspannen der Wellenteile sind dabei beliebig geeignete Spanneinrichtungen verwendbar, beispielsweise Flanschringe, die sich an den die Kegelflächen wellenseitig begrenzenden, ringförmigen Stirnflächen abstützen und miteinander verschraubbar sind.

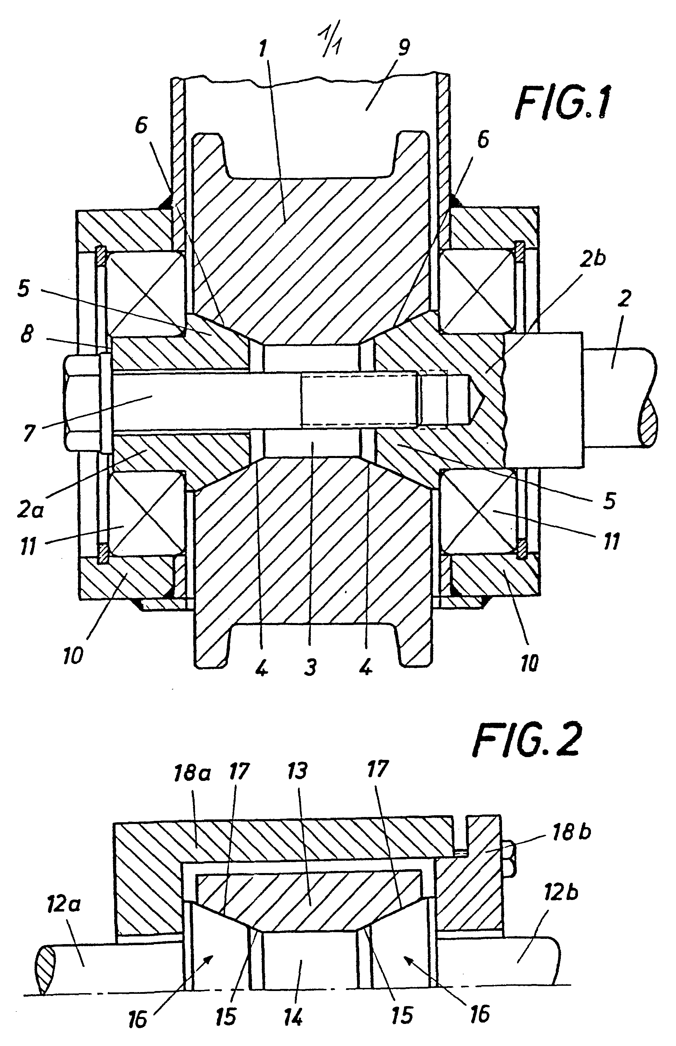

In der Zeichnung ist der Erfindungsgegenstand beispielsweise dargestellt, und zwar zeigen Fig. 1 die Ausbildung einer Radlagerung im Axialschnitt und Fig. 2 die Ausbildung einer Wellenkupplung ebenfalls im Axialschnitt.

Gemäß Fig. 1 weist ein Rad 1 zur drehfesten Lagerung auf einer mit einem Antrieb verbundenen Welle 2 eine Nabenbohrung 3 auf, die sich nach beiden Seiten hin erweitert und zwei Konusse 4 bildet. Die Welle 2 ihrerseits besteht aus zwei im Radbereich voneinander getrennten Teilen 2a, 2b, deren einander zugekehrte, als Druckstücke wirkende Endabschnitte 5 in die Nabenbohrung 3 eindringen und sich mit Kegelflächen 6 passend an die Konusse 4 anlegen. Die beiden Wellenteile 2a, 2b sind miteinander über eine Spannschraube 7 verbunden, die von der freien Stirnfläche 8 des Wellenteiles 2a her einschraubbar und anziehbar ist. Durch das Anziehen der Spannschraube 7 werden die beiden Wellenteile 2a, 2b gegeneinander und mit dem Rad 1 verspannt, so daß sich ein sicherer, selbstzentrierender und doch wieder leicht lösbarer Radsitz ergibt.

Das Rad 1 ist mit seiner Welle 2 in einem Radkasten 9 eingesetzt, der in ungeteilten Lagergehäusen 10 Wälzlager 11 für die Welle 2 aufnimmt. Jedem Wellenteil 2a bzw. 2b ist dabei ein eigenes Wälzlager 11 zugeordnet, das unmittelbar an die Kegelflächen 6 bzw. die Endabschnitte 5 anschließend auf den Wellenteilen sitzt, wodurch eine beidseits möglichst nahe dem Rad 1 Liegende Lagerung der Welle 2 gegeben ist.

Wie in Fig. 2 angedeutet, ist zur starren Verbindung der beiden Wellenteile 12a, 12b eine als Kupplungsmuffe dienende, zylindrische Nabe 13 vorgesehen, deren Bohrung 14 zwei Konusse 15 aufweist. Die Wellenteile 12a, 12b bilden mit Endabschnitten 16 an die Konusse 15 angepaßte Kegelflächen 17 und werden über axial miteinander verschraubbare Flanschringe 18a, 18b unter Zwischenlage der Kupplungsmuffe zusammengespannt. Es entsteht eine drehfeste, biegesteife, selbstzentrierende zug- und druckfeste Wellenverbindung, die außerdem leicht lösbar bleibt und ein einstellbares Verbindungsmoment besitzt.

## Ansprüche

1. Nabenverbindung für eine drehfest, aber abnehmbar auf einer geteilten Welle sitzende Nabe (1, 13), insbesondere Radnabe, mit einer sich beidseitig nach außen hin konisch erweiternden Nabenbohrung und zwei axial verspannbaren, den Konussen der Nabenbohrung angepaßte Kegelflächen aufweisenden Druckstücken, dadurch gekennzeichnet, daß die einander zugekehrten Endabschnitte (5; 16) der beiden Wellenteile (2a, b; 12a, b) selbst die Druckstücke bilden.

2. Nabenverbindung nach Anspruch 1, dadurch gekennzeichnet, daß die beiden Wellenteile (2a, 2b) von einer freien Stirnfläche (8) eines Wellenteiles (2a) her über eine Spannschraube (7) miteinander verbunden sind.

3. Nabenverbindung nach Anspruch 1, dadurch gekennzeichnet, daß die beiden Wellenteile (12a, 12b) über axial miteinander verschraubbare Flanschringe (18a, 18b) od. dgl. unter Zwischenlage der Nabe (13) zusammengespannt sind.

## Claims

1. A hub joint for a hub (1, 13), which is non-rotatably but detachably secured to a divided shaft, particularly for a wheel hub, comprising a hub bore which flares conically toward both ends, and two pressure members, which are adapted to be axially forced towards each other and have conical surfaces confirming to the cones of the hub bore, characterized in that the confronting end portions (5; 16) of the two shaft parts (2a, b; 12a, b) constitute the pressure members.

2. A hub joint according to claim 1, characterized in that the two shaft parts (2a, 2b) are connected to each other by a clamp screw (7) from a free end face (8) of one shaft part (2a).

3. A hub joint according to claim 1, characterized in that the two shaft parts (12a, 12b) are forced against each other and against the interposed hub (13) by means of flange rings (18a, 18b) or the like means, which are adapted to be connected by axial screws.

**Revendications**

1. Assemblage de moyeu destiné à un moyeu (1, 13) monté, de façon solidaire en rotation mais amovible, sur un arbre divisé, en particulier à un moyeu de roue, présentant une perforation de moyeu qui s'élargit coniquement vers l'extérieur des deux côtés et deux éléments de pression pouvant être serrés axialement et présentant des surfaces coniques adaptées aux cônes de la perforation de moyeu, assemblage caractérisé par le fait que les tronçons terminaux tournés l'un vers l'autre (5, 16) des deux parties d'arbre (2a, 2b ; 12a, 12b) forment eux-mêmes les éléments de pression.

2. Assemblage selon la revendication 1, caractérisé par le fait que les deux parties d'arbre (2a, 2b) sont assemblées entre elles par une vis de serrage (7) partant d'une surface frontale libre (8) d'une partie d'arbre (2a).

3. Assemblage selon la revendication 1, caractérisé par le fait que les deux parties d'arbre (12a, 12b) sont serrées ensemble par l'intermédiaire de brides (18a, 18b) ou éléments similaires pouvant se visser axialement ensemble, avec interposition du moyeu (13).

FIG.1

FIG.2